# EUROPEAN PATENT SPECIFICATION

(11) **EP 4 507 408 B1**
(45) Date of publication and mention of the grant of the patent: **08.07.2026**
(21) Application number: 22936104.3
(22) Date of filing: 06.04.2022
(51) Int. Cl.: H04W 4/40, H04W 76/14, H04W 4/02, H04W 64/00, H04W 8/00, H04W 92/18

(54) **INFORMATION DETERMINATION METHOD, INFORMATION SENDING METHOD, COMMUNICATION SYSTEM, APPARATUS, AND DEVICE**
INFORMATIONSBESTIMMUNGSVERFAHREN, INFORMATIONSSENDEVERFAHREN, KOMMUNIKATIONSSYSTEM, GERÄT UND VORRICHTUNG
PROCÉDÉ DE DÉTERMINATION D'INFORMATIONS, PROCÉDÉ D'ENVOI D'INFORMATIONS, SYSTÈME DE COMMUNICATION, APPAREIL ET DISPOSITIF

(43) Date of publication of application: 12.02.2025
(73) Proprietor: Beijing Xiaomi Mobile Software Co., Ltd., Beijing 100085 (CN)
(72) Inventor: SHEN, Yang, Beijing 100085 (CN)
(74) Representative: Stöckeler, Ferdinand
(86) International application number: PCT/CN2022/085418
(87) International publication number: WO 2023/193155

(56) References cited:
- CN-A- 112 640 346
- CN-A- 112 771 896
- CN-A- 112 789 912
- CN-A- 113 383 563
- XIAOMI: "Proposed new solution on authorization and policy/parameter provisioning to UE", vol. SA WG2, no. e-meeting; 20220406 - 20220412, 29 March 2022 (2022-03-29), XP052133727, Retrieved from the Internet <URL:https://ftp.3gpp.org/tsg_sa/WG2_Arch/TSGS2_150E_Electronic_2022-04/Docs/S2-2202908.zip S2-2202908 pCR TR 23.700-86 FS_Ranging_SL_Proposed new Solution on authorisation and policyparameter provisioning to UE.doc> [retrieved on 20220329]
- "3rd Generation Partnership Project; Technical Specification Group Services and System Aspects; Study on Architecture Enhancement to support Ranging based services and sidelink positioning; (Release 18)", no. V0.1.0, 4 March 2022 (2022-03-04), pages 1 - 15, XP052144385, Retrieved from the Internet <URL:https://ftp.3gpp.org/Specs/archive/23_series/23.700-86/23700-86-010.zip 23700-86-010_MCCclean.docx> [retrieved on 20220304]
- HUAWEI ET AL: "Solution for KI#7 on ranging and sidelink positioning service exposure to AF", vol. SA WG2, no. e-meeting; 20220406 - 20220412, 29 March 2022 (2022-03-29), XP052133189, Retrieved from the Internet <URL:https://ftp.3gpp.org/tsg_sa/WG2_Arch/TSGS2_150E_Electronic_2022-04/Docs/S2-2202347.zip S2-2202347 23.700-86 Solution for KI#7 on ranging and sidelink positioning service exposure to AF.docx> [retrieved on 20220329]
- XIAOMI: "Proposed new solution on authorization and policy/parameter provisioning to UE", 3GPP DRAFT; S2-2202908, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. e-meeting; 20220406 - 20220412, 29 March 2022 (2022-03-29), Mobile Competence Centre ; 650, route des Lucioles ; F-06921 Sophia-Antipolis Cedex ; France, XP052133727

## Description

### TECHNICAL FIELD

The disclosure relates to the field of communication technologies, and provides an information determining method, an information sending method, a communication system, a communication device and a communication apparatus.

### BACKGROUND

In a sidelink (SL) communication, there is a ranging/SL positioning function. The ranging function refers to a function that any terminal may determine a distance among multiple other terminals, or determine a direction and/or relative positioning of the target terminal and another reference terminal. The SL positioning function refers to positioning the terminal via the SL to determine the geographical location of the terminal.

There is currently no definite solution to what strategy parameters the terminal needs to adopt for the ranging/SL positioning function under different service types.

S2-2202908 proposes a new solution on authorization and policy/parameter provisioning to UE for Study on Ranging based services and sidelink positioning.

### SUMMARY

The invention is defined by the independent claims.

The technical solutions in the embodiments of the present disclosure at least provide the following advantages.

The service request sent by the second device to the first device carries a service type, and after receiving the service request, the first device determines the policy/parameter used to perform the ranging/SL positioning function according to the service type carried in the service request.

### BRIEF DESCRIPTION OF THE DRAWINGS

In order to clearly illustrate the technical solution of the embodiments of the disclosure, a brief description of drawings used in the embodiments is given below. Obviously, the drawings in the following descriptions are only part of the embodiments of the disclosure, and for those skilled in the art, other drawings can be obtained according to these drawings without creative works.
FIG. 1 is a block diagram of a communication system according to an embodiment of the present disclosure;
FIG. 2 is a flow chart of an information determining method according to an embodiment of the present disclosure;
FIG. 3 is a flow chart of an information determining and sending method according to an embodiment of the present disclosure;
FIG. 4 is a flow chart of an information determining and sending method according to an embodiment of the present disclosure;
FIG. 5 is a flow chart of an information determining and sending method according to an embodiment of the present disclosure;
FIG. 6 is a flow chart of an information determining and sending method according to an embodiment of the present disclosure;
FIG. 7 is a flow chart of an information determining and sending method according to an embodiment of the present disclosure;
FIG. 8 is a flow chart of an information determining and sending method according to an embodiment of the present disclosure;
FIG. 9 is a schematic diagram of an information determining device according to an embodiment of the present disclosure;
FIG. 10 is a schematic diagram of an information sending device according to an embodiment of the present disclosure;
FIG. 11 is a schematic diagram of the structure of a communication device according to an embodiment of the present disclosure.

### DETAILED DESCRIPTION

In order to make the purpose, technical solution and advantages of the present disclosure clearer, the implementation of the present disclosure will be further described in detail in conjunction with the accompanying drawings.

Here, the exemplary embodiments will be described in detail, and examples thereof are shown in the accompanying drawings. When the following description refers to the drawings, unless otherwise indicated, the same numbers in different drawings represent the same or similar elements. The implementation described in the following embodiments do not represent all implementation consistent with the present disclosure. Instead, they are only examples of devices and methods consistent with some aspects of the present disclosure as detailed in the attached claims.

The terms used in the present disclosure are only for the purpose of describing specific embodiments and are not intended to limit the present disclosure. The singular forms "one" and "the" used in the present disclosure and the attached claims are also intended to include plural forms unless the context clearly indicates other meanings. It should also be understood that the term "and/or" used herein refers to and includes any or all possible combinations of one or more associated listed items.

It should be understood that although the terms first, second, third, etc. may be used in the present disclosure to describe various information, these information should not be limited to these terms. These terms are only used to distinguish the same type of information from each other. For example, without departing from the scope of the present disclosure, the first information may also be referred to as the second information, and similarly, the second information may also be referred to as the first information.

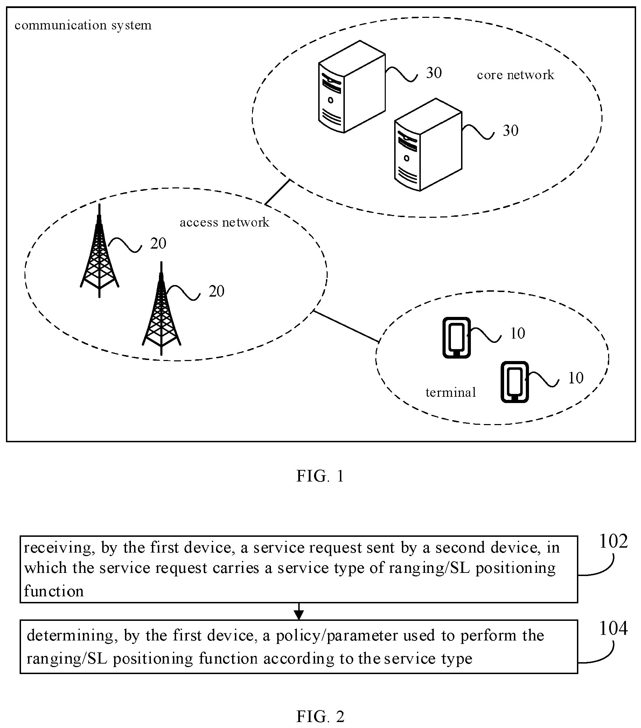

FIG. 1 shows a block diagram of a communication system according to an embodiment of the present disclosure, and the communication system may include multiple devices, which are a terminal 10, an access network device 20, and a core network device 30.

The number of terminals 10 is usually multiple, and one or more terminals 10 may be distributed in a cell managed by each access network device 20. The terminal 10 may include various handheld devices with wireless communication functions, vehicle-mounted devices, wearable devices, computing devices, or other processing devices connected to a wireless modem, as well as various forms of user equipment (UE), mobile stations (MS), etc. For the convenience of description, in the embodiments of the present disclosure, the above-mentioned devices are collectively referred to as terminals.

The access network device 20 is a device deployed in an access network to provide wireless communication functions for the terminal 10. For the convenience of description, in the embodiments of the present disclosure, the above-mentioned devices that provide wireless communication functions for the terminal 10 are collectively referred to as network devices. A connection may be established between the network device 20 and the terminal 10 via an air interface, so that communication is performed via the connection, including signaling and data interaction. There can be multiple network devices 20, and two adjacent network devices 20 can also communicate with each other by wire or wireless ways. The terminal 10 can switch between different network devices 20, that is, establish connections with different network devices 20.

The network device 20 may include various forms of macro base stations, micro base stations, relay stations, access points, etc. In systems adopting different wireless access technologies, the names of devices with network device functions may be different, for example, in 5G NR systems, they are called gNodeB or gNB. With the evolution of communication technology, the name "network device" may change.

The core network device 30 is a device deployed in the core network. The function of the core network device 30 is mainly to provide user connection, user management, and service bearing, and to provide an interface to the external network as a bearer network. The core network device 30 includes various core network elements with various management functions. For example, the core network element includes an Access and Mobility Management Function (AMF) network element, a Session Management Function (SMF) network element, a Policy Control Function (PCF) network element, a User Plane Function (UPF) network element, a Network Slice Selection Function (NSSF) network element, an Authentication Server Function (AUSF) network element, a Unified Data Management (UDM) network element, an Application Function (AF) network element, etc.

In some embodiments, the access network device and the core network device mentioned above are collectively referred to as network devices, that is, the terminal interacts with the network device for data.

FIG. 2 shows a flow chart of an information determining method according to an embodiment of the present disclosure, which is implemented by a first device and includes the following steps.

Step 102: The first device receives a service request sent by a second device.

Schematically, the service request carries a service type of ranging/sidelink (SL) positioning function.

In SL communication, there is a ranging/SL positioning function, and the ranging/SL positioning function includes at least one of a ranging function and a SL positioning function. The ranging function refers to a function that any terminal may determine the distance between multiple other terminals, or determine the direction and/or relative positioning of the target terminal and another reference terminal; the SL positioning function refers to positioning the terminal via the SL to determine the geographical location of the terminal.

Optionally, the ranging/SL positioning function is implemented via a direct communication interface (PC5 interface).

Taking the first device as the first terminal as an example, the first device performing the ranging/SL positioning function specifically refers to: the first terminal determines the distance between the first terminal and other terminals, or determines the direction and/or relative positioning with the other terminals; determines the geographical location of the first terminal via the SL.

Schematically, the service types of the ranging/SL positioning function include at least two types; after receiving the service request sent by the second device, the first device can obtain the service type of the ranging/SL positioning function carried in the service request to determine the policy/parameter used to perform the ranging/SL positioning function.

Optionally, the service type of the ranging/SL positioning function includes at least one of the following: vehicle to everything (V2X) service; commercial service; public safety service. The V2X service can be the first service, and the commercial service and/or the public safety service can be the second service.

According to different service types, the first device determines that the policy/parameter used to implement the ranging/SL positioning function are different. For example, when the service type includes the first service, the first device implements the first policy/parameter; when the service type includes the second service, the first device implements the second policy/parameter, and the second policy/parameter is different from the first policy/parameter. The policy/parameter used by the ranging/SL positioning function include at least one of the policy used by the ranging/SL positioning function and the parameters used by the ranging/SL positioning function.

For example, if the service type of the ranging/SL positioning function is a V2X service, the policy/parameter determined by the first device is the ranging/SL positioning policy/parameter of the V2X service; for another example, if the service type of the ranging/SL positioning function is a commercial service or a public safety service, the policy/parameter determined by the first device is the ranging/SL positioning policy/parameter of Proximity Services (ProSe).

Optionally, the service request is a ranging/SL positioning service request. In the case where the second device includes one of a second terminal, an application server, and a core network function, the ranging/SL positioning service request is sent in a ranging/SL positioning service process initiated by a corresponding second device. For example, the second device includes a second terminal, and the ranging/SL positioning service request is sent in the ranging/SL positioning service process initiated by the second terminal; for another example, the second device includes an application server, and the ranging/SL positioning service request is sent in the ranging/SL positioning service process initiated by the application server; for another example, the second device includes a core network function, and the ranging/SL positioning service request is sent in the ranging/SL positioning service process initiated by the core network function.

In a case where the service request is a ranging/SL positioning service request, step 102 can be implemented as follows: in the ranging/SL positioning service process initiated by the second device, the second device sends a ranging/SL positioning service request to the first device.

Step 104: The first device determines the policy/parameter used to perform the ranging/SL positioning function according to the service type.

The policy/parameter used to perform the ranging/SL positioning function are also different depending on the service type.

Taking the service type including the first service and the second service as an example, step 1041 can be implemented as follows.

In a case that the service type includes the first service, the first device determines to implement the first policy/parameter, in which the first policy/parameter is used to implement at least one of the discovery operation and service operation of ranging/SL positioning.

In a case that the service type includes the second service, the first device determines to implement the second policy/parameter, in which the second policy/parameter is used to implement at least one of the discovery operation and service operation of ranging/SL positioning.

The first policy/parameter and the second policy/parameter are different policies/parameters.

Optionally, the first service includes the vehicle network V2X service; the first policy/parameter includes the ranging/SL positioning policy/parameter of the V2X service.

Optionally, the second service includes the commercial service and/or the public safety service; the second policy/parameter includes the ranging/SL positioning policy/parameter of ProSe.

In a case that the service type includes the vehicle network V2X service, the first device enforces the ranging/SL positioning policy/parameter of the V2X service; when the service type includes the commercial service or the public safety service, the first device enforces the ranging/SL positioning policy/parameter of ProSe.

According to the above content, the policy/parameter used to perform the ranging/SL positioning function are affected by the service type. For example, the policy/parameter have two types, namely, the ranging/SL positioning policy/parameter of the V2X service and the ranging/SL positioning policy/parameter of ProSe, the different policies/parameters are listed below.

Schematically, taking the first device being a terminal as an example, the ranging/SL positioning policy/parameter of the V2X service include at least one of the following.

### (1) Authorization policy.

When the terminal is "served by Evolved UMTS Terrestrial Radio Access Network (E-UTRA)" or "served by New Radio (NR)", the authorization policy is to authorize the terminal to perform at least one Public Land Mobile Network (PLMN) of V2X communication on the PC5 reference point. For each PLMN, the terminal is authorized to perform RAT of V2X communication on the PC5 reference point.

When the terminal is "not served by E-UTRA" and "not served by NR", the authorization policy is whether to authorize the UE to perform V2X communication on the PC5 reference point. The authorization policy will also authorize the terminal to perform V2X communication of the Radio Access Network (RAT) on the PC5 reference point.

(2) Radio parameters when the terminal is not served by the interface between the gNB and the 5G CN-Radio Access Network (NG-RAN).

The radio parameters include the radio parameters and geographical areas of each PC5 RAT (i.e. LTE PC5, NR PC5) and an indication of whether each PC5 RAT is "managed by an operator " or "managed by a non-operator ".

When the terminal can be located in the corresponding geographical area, the terminal uses the radio parameters to perform V2X communication on the PC5 reference point when "not served by E-UTRA" and "not served by NR". If the terminal cannot be located in the corresponding geographical area, the terminal has no right to transmit.
(3) PC5 RAT selection and PC5 Tx profile selection policies/parameters.
(4) Policies or parameters associated with privacy information.

The privacy information refers to information that is secure for the terminal to prevent information leakage.

The policies or parameters associated with privacy information include the following.
1.1. A list of V2X service types in a geographic area that requires privacy support.
1.2. A value of a privacy information timer, which indicates the duration of the change of the second layer ID of each source self-assigned by the terminal when privacy protection is required.
   (5) Policies or parameters when selecting LTE PC5.
   (6) Policies or parameters when selecting NR PC5.

The policies or parameters when selecting NR PC5 include at least one of the following.
1.1. Mapping V2X service types to V2X frequencies with geographic areas.
1.2. Mapping of V2X service types to default communication modes (i.e., broadcast mode, multicast mode, or unicast mode).
1.3. Mapping of V2X service types to target layer 2 ID, and broadcasting the mapping relationship.
1.4. Mapping of V2X service types for multicast mode communications to target layer 2 ID.
1.5. Mapping of V2X service types to default target layer 2 ID for initial signaling to establish unicast connections.

(7) A validity timer indicating the expiration time of a V2X policy or parameter.

The validity timer indicates the expiration time of a V2X policy or parameter, that is, when the validity timer expires, the V2X policy or parameter becomes invalid.

Illustratively, the ranging/SL positioning strategy parameters of ProSe include two aspects of parameter information, one of which is the parameter information of direct discovery and the other is the parameter information of direct communication.

Taking the first device as a terminal as an example, the parameter information of direct discovery includes at least one of the following.

### (1) Authorization policy.

The authorization policy is explained in two cases as follows.

The first case: when the terminal is "served by NG-RAN", the authorization policy is an open 5G ProSe direct discovery Model A monitoring authorization policy: the terminal is authorized to perform PLMN monitored by 5G ProSe direct discovery.

Alternatively, when the terminal is "served by NG-RAN", the authorization policy is an open 5G ProSe direct discovery Model A monitoring authorization policy: the UE is authorized to perform broadcasted PLMN.

The second case: for restricted 5G ProSe direct discovery, the following is included.

Restricted 5G ProSe direct discovery Model A (mode A) monitoring authorization policy: the terminal is authorized to perform PLMN monitored by restricted 5G ProSe direct discovery Model A.

Alternatively, the restricted 5G ProSe direct discovery Model A announcement authorization policy: the terminal is authorized to perform the PLMN announced by the restricted 5G ProSe direct discovery Model A.

Alternatively, the restricted 5G ProSe direct discovery Model B (Mode B) discoverer operation authorization policy: the terminal is authorized to perform the PLMN operated by the Model B discoverer.

Alternatively, the restricted 5G ProSe direct discovery Model B discovery operation authorization policy: the terminal is authorized to perform the PLMN operated by the Model B discoverer.

### (2) Parameters for 5G ProSe direct discovery.

A mapping of ProSe services to target layer 2 ID, which is used for sending/receiving the initial signaling of discovery messages.

In some embodiments, the ProSe service is represented by a ProSe identifier.

(3) Radio parameters when the terminal is not served by NG-RAN.

The radio parameters include the radio parameters and geographical area of each NR PC5 and an indication of whether each NR PC5 is "managed by an operator " or "managed by a non-operator". When the terminal is able to locate itself in the corresponding geographic area, the terminal performs 5G ProSe direct discovery on the PC5 reference point using radio parameters when the terminal is "not serve by NG-RAN". Otherwise, the terminal has no right to transmit.
(4) Terminal identifier for restricted ProSe discovery for restricted direct discovery.
(5) Group member discovery parameters.

The group member discovery parameters include at least one of the following.
1.1, application layer group ID: identifying the application layer group or discovery group to which the terminal belongs;
1.2, layer-2 group ID: layer 2 ID represents the application layer group ID;
1.3, user information ID: for model A, corresponding to the user information parameter when the terminal is a notifying UE. For model B, corresponding to the discoverer information in the request message and the discoverer information in the response message when the terminal acts as a discoverer or discoverer terminal respectively.

(6) Validity timer indicating the expiration time of the 5G ProSe direct discovery policy/parameter.

The validity timer indicates the expiration time of the 5G ProSe direct discovery policy/parameter, that is, when the validity timer expires, the 5G ProSe direct discovery policy/parameter becomes invalid.

Taking the first device as a terminal as an example, the parameter information of the direct communication discovery includes at least one of the following.

### (1) Authorization policy.

When the terminal is "served by NG-RAN", the terminal is authorized to perform the PLMN of 5G ProSe direct communication on the PC5 reference point.

When the terminal is "not served by NG-RAN", whether the terminal is authorized to perform 5G ProSe direct communication via the PC5 reference point.

### (2) Multicast mode 5G ProSe direct communication policy/parameter.

The multicast mode 5G ProSe direct communication policy/parameter includes the following.
1.1. For each supported application layer group, parameters that enable the terminal to perform multicast mode 5G ProSe direct communication when provided in PCF, provided in ME, or configured in UICC.
1.2. Application layer group ID: identifying the application layer group to which the terminal belongs.
1.3. ProSe layer 2 group ID: the target layer 2 ID is effective when the application layer group ID is provided by the application layer.
1.4. ProSe group IP multicast address.
1.5. Indicating whether the terminal uses Internet Protocol version 4 (IPv4) or Internet Protocol version 6 (IPv6).
1.6. For a specific group configured to operate using IPv4, the IPv4 address will be used as the source address by the terminal. If not provided, the terminal uses the dynamic configuration of the IPv4 link local address to obtain the link local address of the group.

(3) Radio parameters when the terminal is not served by NG-RAN.

The radio parameters include: radio parameters and geographical areas of each NR PC5 and an indication of whether each NR PC5 is "managed by an operator" or "managed by a non-operator". When the terminal is able to locate in the corresponding geographical area, the terminal uses the radio parameters to perform 5G ProSe direct communication on the PC5 reference point when "not served by NG-RAN". Otherwise, the terminal has no right to transmit.

### (4) Policies or parameters associated with privacy information.

1.1. List of ProSe service types for geographic areas that require privacy support.
1.2. A value of privacy information timer, indicating the duration of the change of the second layer ID of each source self-assigned by the terminal when privacy protection is required.

### (5) Policies or parameters when selecting NR PC5.

1.1. Mapping ProSe services to radio frequencies with geographic areas.
1.2. Mapping of ProSe services to target layer 2 ID for broadcast.
1.3. Mapping of ProSe services to target layer 2 ID for multicast.
1.4. Mapping of ProSe services to default target layer 2 ID for initial signaling to establish unicast connections.

### (6) Path selection policy.

(7) Validity timer indicating the expiration time of 5G ProSe direct communication policy/parameter.

The validity timer indicates the expiration time of the 5G ProSe direct communication policy/parameter, that is, when the validity timer expires, the 5G ProSe direct communication policy/parameter become invalid.

In summary, the information determining and sending method according to this embodiment of the present disclosure provides a solution for what kind of policy/parameter to adopt for ranging/SL positioning functions under different service types. The service request sent by the second device to the first device carries the service type; after receiving the service request, the first device can determine the policy/parameter adopted for performing the ranging/SL positioning function according to the service type carried in the service request.

Optionally, when the service type includes V2X service, the first device determines the ranging/SL positioning policy/parameter for performing V2X; when the service type includes commercial service and/or public safety service, the first device determines the ranging/SL positioning policy/parameter for performing ProSe.

In an optional implementation scenario, the communication system includes a first device, a second device, and a third device. The first device and the third device are two different devices for performing ranging/SL positioning functions, and the first device and the third device perform similar steps in determining and sending information. Schematically, the third device receives the service request sent by the first device, and the service request carries the service type of the ranging/SL positioning function received by the first device from the second device. For example, the first device is a first terminal, the third device is a second terminal, and the first terminal and the second terminal are two different terminals that perform ranging/SL positioning functions.

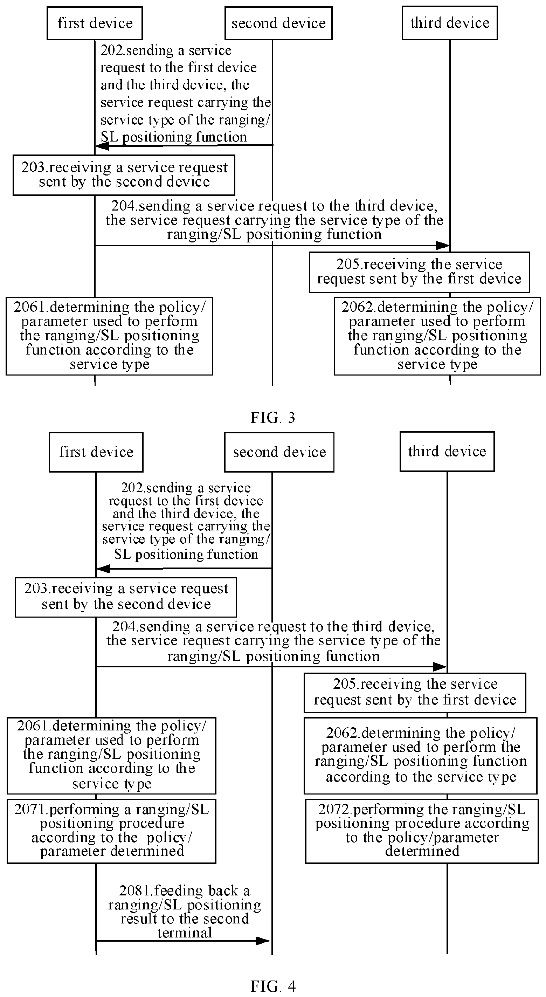

FIG. 3 shows a flow chart of an information determining and sending method according to an embodiment of the present disclosure. The information determining method is performed by the first device and the third device, and the information sending method is performed by the second device. The method includes the following steps.

Step 202: The second device sends a service request to the first device.

Schematically, the service request carries the service type of the ranging/SL positioning function, and the service type is used by the first device and the third device to determine the policy/parameter used to perform the ranging/SL positioning function.

The relevant description of the ranging/SL positioning function can be referred to the content of step 102, which will not be repeated. Taking the first device as the first terminal and the third device as the third terminal as an example, the first device performs the ranging/SL positioning function specifically means: the first terminal determines the distance between the first terminal and the third terminal, or determines the direction and/or relative positioning with the third terminal; determines the geographical location of the first terminal via the SL.

Schematically, the service types of the ranging/SL positioning function include at least two types; after the first device receives the service request sent by the second device and the third device receives the service request sent by the first device, the first device and the third device can obtain the service type of the ranging/SL positioning function carried in the service request, to determine the policy/parameter used to perform the ranging/SL positioning function.

Optionally, the service type of the ranging/SL positioning function includes at least one of the following: vehicle to everything (V2X) service; commercial service; public safety service. The V2X service can be the first service, and the commercial service and/or the public safety service can be the second service.

According to different service types, the first device and the third device determine different policies/parameters used to perform the ranging/SL positioning function. For example, when the service type includes the first service, the first device and the third device implement the first policy/parameter; when the service type includes the second service, the first device and the third device implement the second policy/parameter, and the second policy/parameter is different from the first policy/parameter. The policy/parameter adopted by the ranging/SL positioning function include at least one of the policy adopted by the ranging/SL positioning function and the parameters adopted by the ranging/SL positioning function.

For example, if the service type of the ranging/SL positioning function is a V2X service, the policy/parameter determined by the first device and the third device is the ranging/SL positioning policy/parameter of the V2X service; for another example, if the service type of the ranging/SL positioning function is a commercial service or a public safety service, the policy/parameter determined by the first device and the third device is the ranging/SL positioning policy/parameter of Proximity Services (ProSe).

Optionally, the service request is a ranging/SL positioning service request. In a case where the second device includes one of a second terminal, an application server, and a core network function, the ranging/SL positioning service request is sent in the ranging/SL positioning service process initiated by the corresponding second device.

In a case where the service request is a ranging/SL positioning service request, step 202 can be implemented as follows: in the ranging/SL positioning service process initiated by the second device, the second device sends a ranging/SL positioning service request to the first device.

Optionally, the second device includes one of a second terminal, an application server, and a core network function. For example, the second device includes a second terminal; for another example, the second device includes an application function (AF); for another example, the second device includes a 5G core network function (5GC NF).

Depending on the second device, the service request can be sent via different network elements.

Optionally, the second device includes a second terminal, and step 201 can be implemented as follows: the second terminal sends a service request to the first device via the AMF.

In a case where the first device includes a first terminal, the first terminal corresponds to a first AMF, and the second terminal corresponds to a second AMF, the service request sending process is as follows: the second terminal sends a service request to the second AMF; the second AMF sends a service request to the first AMF; the first AMF sends a service request to the first terminal.

Optionally, the second device includes an AF, and step 201 can be implemented as follows: the second terminal sends a service request to the first device via a network exposure function (NEF).

When the first device includes a first terminal and the first terminal corresponds to a first AMF, the process of sending the service request is as follows: the AF sends a service request to the NEF; the NEF sends a service request to the first AMF; the first AMF sends a service request to the first terminal.

Step 203: The first device receives a service request sent by the second device.

Schematically, the service request carries the service type of the ranging/SL positioning function, and the service type is used by the first device to determine the policy/parameter used by the ranging/SL positioning function.

The relevant descriptions of the service type and policy/parameter can be referred to the aforementioned content and will not be repeated.

Step 204: The first device sends a service request to the third device.

Schematically, the service request carries the service type of the ranging/SL positioning function received by the first device from the second device, and the service type is used by the third device to determine the policy/parameter used by the ranging/SL positioning function.

The relevant descriptions of the service type and policy/parameter can be referred to the aforementioned content and will not be repeated.

Step 205: The third device receives the service request sent by the first device.

Schematically, the service request carries the service type of the ranging/SL positioning function received by the first device from the second device, and the service type is used by the third device to determine the policy/parameter used by the ranging/SL positioning function.

The relevant descriptions of the service type and policy/parameter can be referred to the aforementioned content and will not be repeated.

Step 2061: The first device determines the policy/parameter used to perform the ranging/SL positioning function according to the service type.

Depending on the service type, the policy/parameter used to perform the ranging/SL positioning function are also different.

Taking the service type including the first service and the second service as an example, step 2061 can be implemented as follows.

In a case that the service type includes the first service, the first device determines to implement the first policy/parameter, and the first policy/parameter is used to perform at least one of the discovery operation and service operation of ranging/SL positioning;
In a case that the service type includes the second service, the first device determines to implement the second policy/parameter, and the second policy/parameter is used to perform at least one of the discovery operation and service operation of ranging/SL positioning;
The first policy/parameter and the second policy/parameter are different policies/parameters.

Optionally, the first service includes the vehicle network V2X service; the first policy/parameter includes the ranging/SL positioning policy/parameter of the V2X service.

Optionally, the second service includes the commercial service and/or the public safety service; the second policy/parameter includes the ranging/SL positioning policy/parameter of ProSe.

In a case that the service type includes the vehicle network V2X service, the first device enforces the ranging/SL positioning policy/parameter of the V2X service; in a case that the service type includes commercial service or public safety service, the first device enforces the ranging/SL positioning policy/parameter of ProSe.

According to the above content, the policy/parameter used to perform the ranging/SL positioning function are affected by the service type. Schematically, taking the third device as a terminal, the policies/parameters are divided into two types: the ranging/SL positioning policy/parameter of the V2X service and the ranging/SL positioning policy/parameter of ProSe as an example, different policies/parameters can be referred to the parameter information listed in step 104, which will not be repeated.

Step 2062: The third device determines the policy/parameter used to perform the ranging/SL positioning function according to the service type.

Depending on the service type, the policy/parameter used to perform the ranging/SL positioning function are also different.

Taking the service type including the first service and the second service as an example, step 2062 can be implemented as follows.

In a case that the service type includes the first service, the third device determines to implement the first policy/parameter, and the first policy/parameter is used to implement at least one of the discovery operation and service operation of ranging/SL positioning.

In a case that the service type includes the second service, the third device determines to implement the second policy/parameter, and the second policy/parameter is used to implement at least one of the discovery operation and service operation of ranging/SL positioning;
The first policy/parameter and the second policy/parameter are different policies/parameters.

Optionally, the first service includes the vehicle network V2X service; the first policy/parameter includes the ranging/SL positioning policy/parameter of the V2X service.

Optionally, the second service includes the commercial service and/or the public safety service; the second policy/parameter includes the ranging/SL positioning policy/parameter of ProSe.

According to the above content, the policy/parameter used to implement the ranging/SL positioning function are affected by the service type. Illustratively, taking the third device is a terminal, and the policies/parameters are divided into two types: ranging/SL positioning policy/parameter of the V2X service and ranging/SL positioning policy/parameter of ProSe as an example, different policies/parameters can be referred to the parameter information listed in step 104, and will not be repeated.

In summary, the information determining and sending method according to this embodiment of the present disclosure provides a solution for which policy/parameter to use for ranging/SL positioning functions under different service types. The service request sent by the second device to the first device carries the service type; the first device sends a service request to the third device, and the service request carries the service type of the ranging/SL positioning function received by the first device from the second device; after receiving the service request, the first device and the third device can determine the policy/parameter used to perform the ranging/SL positioning function according to the service type carried in the service request.

Optionally, in a case that the service type includes V2X service, the first device and the third device determine to implement the ranging/SL positioning policy/parameter of the V2X service; in a case that the service type includes commercial service and/or public safety service, the first device and the third device determine to implement the ranging/SL positioning policy/parameter of ProSe.

Referring to FIG. 3, FIG. 4 shows a flow chart of an information determining and sending method according to an embodiment of the present disclosure, and the method further includes the following steps.

Step 2071: The first device performs a ranging/SL positioning procedure according to the policy/parameter determined.

The policy/parameter is determined according to the service type of the ranging/SL positioning function, and the service type is carried in the service request sent by the second device. The determination process of the policy/parameter can be referred to the above content and will not be repeated.

Schematically, the ranging/SL positioning procedure refers to a procedure for executing the ranging function and/or the SL positioning function. The relevant description of the ranging function and the SL positioning function can be referred to the above content and will not be repeated.

Optionally, the first device includes a first terminal.

Step 2081: The first device feeds back a ranging/SL positioning result to the second terminal.

Schematically, after the first device executes the ranging/SL procedure, the ranging/SL positioning result can be obtained. The ranging/SL positioning result includes at least one of the following: the distance between the first device and the third device; the direction and/or relative positioning of the first device relative to the third device; the geographical location of the first device.

Optionally, the second device includes one of the second terminal, the application server and the core network function. For example, the second device includes the second terminal; for another example, the second device includes the AF; for another example, the second device includes the 5GC NF.

Step 2072: The third device performs the ranging/SL positioning procedure according to the policy/parameter determined.

The policy/parameter is determined according to the service type of the ranging/SL positioning function, and the service type is carried in the service request sent by the second device. The determination process of the policy/parameter can be referred to the above content and will not be repeated.

Schematically, the ranging/SL positioning procedure refers to a procedure that performs the ranging function and/or the SL positioning function. The relevant description of the ranging function and the SL positioning function can be referred to the above content and will not be repeated.

Optionally, the third device includes a third terminal.

Schematically, after the third device executes the ranging/SL procedure, the ranging/SL positioning result can be obtained. The ranging/SL positioning result includes at least one of the following: the distance between the third device and the first device; the direction and/or relative positioning of the third device relative to the first device; the geographical location of the third device.

The ranging/SL positioning result obtained by the third device is fed back to the second device via the first device. In which, after the third device performs the ranging/SL procedure, the ranging/SL positioning result can be obtained; then, the third device sends the ranging/SL positioning result to the first device, and the first device feeds back the ranging/SL positioning result to the second device.

Optionally, the information sending method according to this embodiment of the present disclosure also includes: the second device receives the ranging/SL positioning result fed back by the first device. Optionally, the ranging/SL positioning result received by the second device is determined by the first device performing the ranging/SL positioning procedure according to the policy/parameter determined.

Schematically, taking the first device including the first terminal, the third device including the third terminal, and the service type including at least one of V2X service, commercial service and public safety service as an example, the ranging/SL positioning function can be used in at least one of the above three services. For different service types, the first terminal and the third terminal can adopt different behaviors to support the ranging/SL positioning function.

Taking the second device as a policy control function (PCF) as an example, PCF determines service authorization policy/parameter on use of ranging/SL positioning for V2X and ProSe services, and provides the same to the terminal. The terminal includes the first terminal and the third terminal.

Schematically, PCF provides the following two different ranging/SL positioning policy/parameter for V2X and ProSe:
- The Ranging/SL positioning policy/parameter of the V2X service applies to Ranging/SL positioning used for V2X service applications;
- The Ranging/SL positioning policy/parameter of ProSe applies to Ranging/SL positioning used for commercial and public safety service applications.

Schematically, after the first terminal receives the service request sent by the second device and the third terminal receives the service request sent by the first terminal, the first terminal and the third terminal may determine to apply the ranging/SL positioning policy/parameter of the V2X service or the ranging/SL positioning policy/parameter of ProSe according to the service type carried in the service request.

Optionally, the first terminal and the third terminal determine that the policy/parameter used to perform the ranging/SL positioning function can be implemented as follows.
- If the service type of ranging/SL positioning is a V2X service, the ranging/SL positioning policy/parameter of the V2X service are enforced for at least one of the ranging/SL positioning discovery operation and service operation.
- If the service type of ranging/SL positioning is a commercial service or a public safety service, the ranging/SL positioning policy/parameter of ProSe are enforced for at least one of the ranging/SL positioning discovery operation and service operation.

Schematically, the information determining and sending method according to this embodiment of the present disclosure is applicable to all the Ranging/SL positioning service request in the Ranging/SL positioning service procedures initiated by the terminal, Application server and 5GC NF.

In summary, in the information determining and sending method according to this embodiment of the present disclosure, after determining the policy/parameter adopted for performing the ranging/SL positioning function, the first device and the third device can perform the ranging/SL positioning procedure according to different policies/parameters to obtain the ranging/SL positioning result, and the first device feeds back the ranging/SL positioning result to the second device.

According to the foregoing content, the second device includes one of the second terminal, the application server and the core network function. Taking the first device including the first terminal and the third device including the third terminal as an example, the second device can be one of the second terminal, the AF and the 5GC NF.

Depending on the second device, different implementations of the information determination and transmission method are given below.

### 1. A PC5-based ranging/SL positioning process initiated by the first terminal.

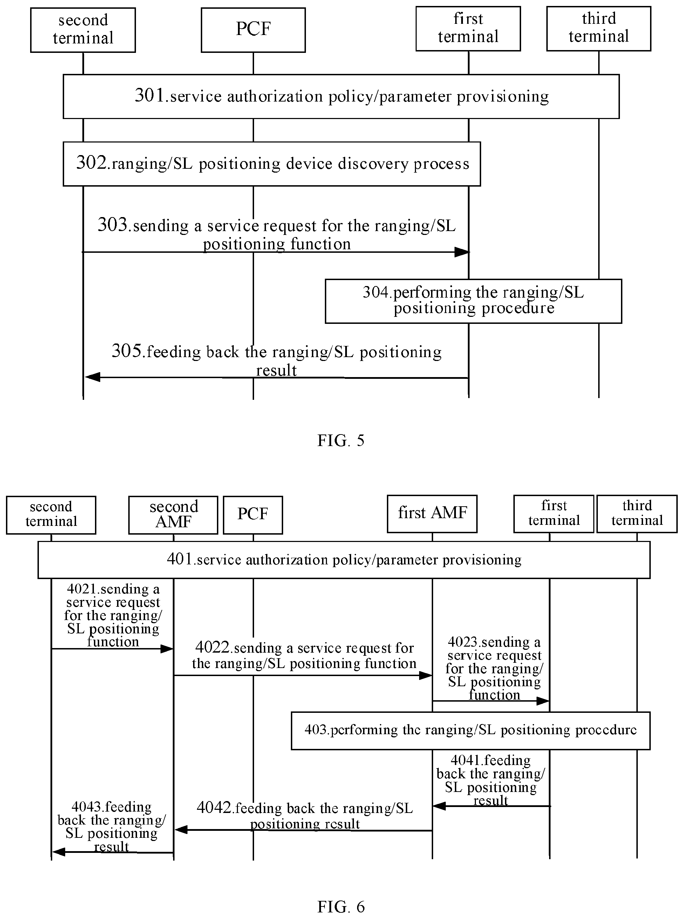

FIG. 5 shows a flow chart of an information determining and sending method according to an embodiment of the present disclosure. The information determining method is implemented by the first terminal and the third terminal, and the information sending method is implemented by the second terminal. This embodiment of the present disclosure shows a PC5 based ranging/SL positioning process initiated by the first terminal, and the method includes the following steps.

Step 301: PCF sends service authorization policy/parameter provisioning to the first terminal, the second terminal and the third terminal respectively.

Schematically, the service authorization policy/parameter provisioning is used for the first terminal, the second terminal and the third terminal to select to implement the ranging/SL positioning function.

The service authorization policy/parameter provisioning includes policy/parameter used by the ranging/SL positioning function corresponding to different service types. The relevant information of the policy/parameter can be referred to the above content and will not be repeated.

Step 302: The first terminal and the second terminal perform the ranging/SL positioning device discovery process.

In direct communication, when different devices move, the ranging/SL positioning device discovery process can be implemented to discover the nearby device. The first terminal and the second terminal approach to each other and perform a ranging/SL positioning device discovery process, so that the second terminal can discover the first terminal. The first terminal is within the range of the service request for the ranging/SL positioning function sent by the second terminal.

Step 303: The second terminal sends a service request for the ranging/SL positioning function to the first terminal.

Schematically, the service request carries the service type of the ranging/SL positioning function, and the service type is used by the first device to determine the policy/parameter used to perform the ranging/SL positioning function.

The relevant description of the service type and the policy/parameter can be referred to the above content and will not be repeated.

Step 304: The first terminal and the third terminal execute the ranging/SL positioning procedure.

Schematically, after the first terminal receives the service request sent by the second terminal and the third terminal receives the service request of the first terminal, the first terminal and the third terminal can determine the policy/parameter used to perform the ranging/SL positioning function according to the service type carried in the service request. Subsequently, the first terminal and the third terminal can perform the ranging/SL positioning procedure according to the policy/parameter determined to obtain the ranging/SL positioning result.

The relevant description of the ranging/SL positioning procedure can be referred to the above content and will not be repeated.

Step 305: The first terminal feeds back the ranging/SL positioning result to the second terminal.

Schematically, the ranging/SL positioning result is determined by the first terminal according to the policy/parameter determined by performing the ranging/SL positioning procedure.

### 2. The network-based ranging/SL positioning process initiated by the first terminal.

FIG. 6 shows a flow chart of an information determining and sending method according to an embodiment of the present disclosure. The information determining method is implemented by the first terminal and the third terminal, and the information sending method is implemented by the second terminal. This embodiment of the present disclosure shows a network-based ranging/SL positioning process initiated by the first terminal, and the method includes the following steps.

Step 401: PCF sends the service authorization policy/parameter provisioning to the first terminal, the second terminal and the third terminal respectively.

Schematically, the service authorization policy/parameter provisioning is used for the first terminal, the second terminal and the third terminal to select to realize the ranging/SL positioning function.

The service authorization policy/parameter provisioning includes policy/parameter adopted by the ranging/SL positioning function corresponding to different service types. The relevant information of the policy/parameter can be referred to the aforementioned content and will not be repeated.

Step 4021: The second terminal sends a service request for the ranging/SL positioning function to the second AMF.

The second AMF corresponds to the second terminal.

Step 4022: The second AMF sends a service request for the ranging/SL positioning function to the first AMF.

The first AMF corresponds to the first terminal.

Step 4023: The first AMF sends a service request for the ranging/SL positioning function to the first terminal.

Schematically, the service request carries the service type of the ranging/SL positioning function, and the service type is used by the first device to determine the policy/parameter adopted for performing the ranging/SL positioning function.

The relevant description of the service type and policy/parameter can be referred to the aforementioned content and will not be repeated.

Step 403: The first terminal and the third terminal perform the ranging/SL positioning procedure.

Schematically, after the first terminal receives the service request sent by the second terminal and the third terminal receives the service request sent by the first terminal, the first terminal and the third terminal may determine the policy/parameter used to perform the ranging/SL positioning function according to the service type carried in the service request. Subsequently, the first terminal and the third terminal may execute the ranging/SL positioning procedure according to the policy/parameter determined to obtain the ranging/SL positioning result.

The relevant description of the ranging/SL positioning procedure can be referred to the above content and will not be repeated.

Step 4041: The first terminal feeds back the ranging/SL positioning result to the first AMF.

Step 4042: The first AMF feeds back the ranging/SL positioning result to the second AMF.

Step 4043: The second AMF feeds back the ranging/SL positioning result to the second terminal.

Schematically, the ranging/SL positioning result is determined by the first terminal performing the ranging/SL positioning procedure according to the policy/parameter determined.

### 3. Ranging/SL positioning process initiated by the server.

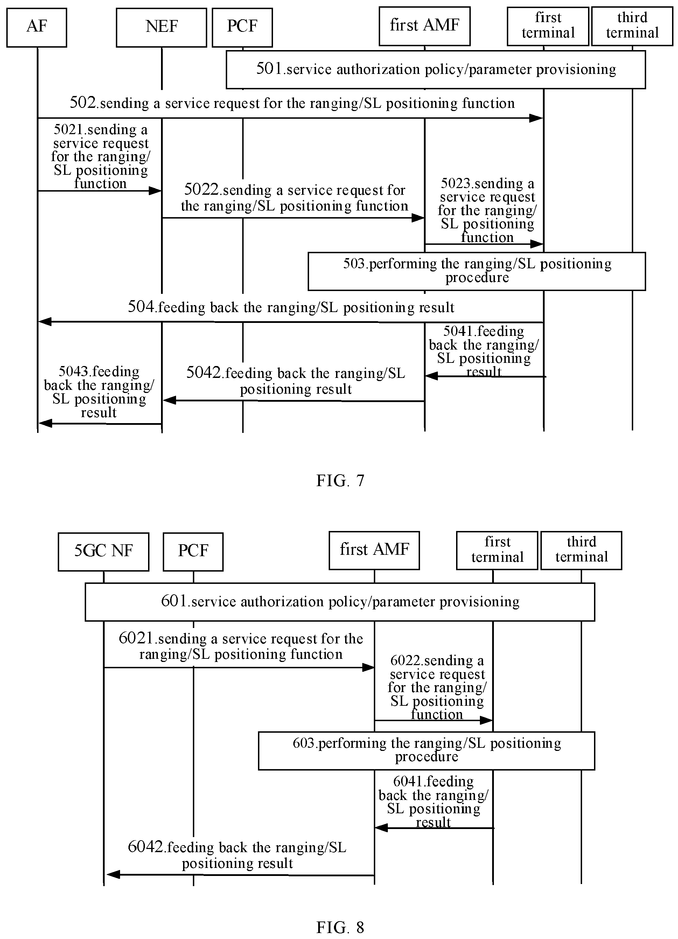

FIG. 7 shows a flow chart of an information determining and sending method according to an embodiment of the present disclosure. The information determining method is implemented by the first terminal and the third terminal, and the information sending method is implemented by the AF. This embodiment of the present disclosure shows a service initiated by a server, and the method includes the following steps.

Step 501: The PCF sends a service authorization policy/parameter provisioning to the first terminal and the second terminal respectively.

Schematically, the service authorization policy/parameter provisioning is used for the first terminal and the second terminal to select to implement the ranging/SL positioning function.

The service authorization policy/parameter provisioning includes policy/parameter used by the ranging/SL positioning function corresponding to different service types. The relevant information of the policy/parameter can be referred to the aforementioned content and will not be repeated.

Step 502: The AF sends a service request for the ranging/SL positioning function to the first terminal.

Step 5021: The AF sends a service request for the ranging/SL positioning function to the Network Exposure Function (NEF).

Step 5022: The NEF sends a service request for the ranging/SL positioning function to the first AMF.

The first AMF corresponds to the first terminal.

Step 5023: The first AMF sends a service request for the ranging/SL positioning function to the first terminal.

Schematically, the service request carries the service type of the ranging/SL positioning function, and the service type is used by the first device to determine the policy/parameter used to perform the ranging/SL positioning function.

The relevant descriptions of the service type and policy/parameter can be referred to the aforementioned content and will not be repeated.

Step 503: The first terminal and the third terminal perform the ranging/SL positioning procedure.

Schematically, after the first terminal receives the service request sent by the AF and the third terminal receives the service request sent by the first terminal, the first terminal and the third terminal can determine the policy/parameter used to perform the ranging/SL positioning function according to the service type carried in the service request. Subsequently, the first terminal and the third terminal can perform the ranging/SL positioning procedure according to the policy/parameter determined to obtain the ranging/SL positioning result.

The relevant descriptions of the ranging/SL positioning procedure can be referred to the aforementioned content and will not be repeated.

Step 504: The first terminal feeds back the ranging/SL positioning result to the AF.

Step 5041: The first terminal feeds back the ranging/SL positioning result to the first AMF.

Step 5042: The first AMF feeds back the ranging/SL positioning result to the NEF.

Step 5043: The NEF feeds back the ranging/SL positioning result to the AF.

Schematically, the ranging/SL positioning result is determined by the first terminal according to the policy/parameter determined by performing the ranging/SL positioning procedure.

### 4. Ranging/SL positioning process initiated by 5GC NF.

FIG. 8 shows a flow chart of an information determining and sending method according to an embodiment of the present disclosure. The information determining method is implemented by the first terminal and the third terminal, this embodiment of the present disclosure shows the service initiated by the 5GC NF, and the information determining method implemented by the 5GC NF. The method includes the following steps.

Step 601: The PCF sends the service authorization policy/parameter provisioning to the first terminal, the second terminal and the 5GC NF respectively.

Schematically, the service authorization policy/parameter provisioning is used for the first terminal, the second terminal and the 5GC NF to select to implement the ranging/SL positioning function.

The service authorization policy/parameter provisioning includes the policy/parameter adopted by the ranging/SL positioning function corresponding to different service types. The relevant information of the policy/parameter can be referred to the aforementioned content and will not be repeated.

Step 6021: The 5GC NF sends a service request for the ranging/SL positioning function to the first AMF.

The first AMF corresponds to the first terminal.

Step 6022: The first AMF sends a service request for the ranging/SL positioning function to the first terminal.

Schematically, the service request carries the service type of the ranging/SL positioning function, and the service type is used by the first device to determine the policy/parameter adopted for performing the ranging/SL positioning function.

The relevant description of the service type and policy/parameter can be referred to the aforementioned content and will not be repeated.

Step 603: The first terminal and the third terminal execute the ranging/SL positioning procedure.

Schematically, after the first terminal receives the service request sent by the AF and the third terminal receives the service request sent by the first terminal, the first terminal and the third terminal can determine the policy/parameter adopted for performing the ranging/SL positioning function according to the service type carried in the service request. Subsequently, the first terminal and the third terminal may execute a ranging/SL positioning procedure according to the policy/parameter determined to obtain a ranging/SL positioning result.

The relevant description of the ranging/SL positioning procedure can be referred to the aforementioned content and will not be repeated.

Step 6041: The first terminal feeds back the ranging/SL positioning result to the first AMF.

Step 6042: The first AMF feeds back the ranging/SL positioning result to the 5GC NF.

Schematically, the ranging/SL positioning result is determined by the first terminal executing a ranging/SL positioning procedure according to the policy/parameter determined.

In summary, the embodiments of the present disclosure provide four different methods for determining and sending information. In the case where the second device is one of the second terminal, the application server and the core network function, different implementation methods of the ranging/SL positioning function are respectively described.

An embodiment of the present disclosure also provides a communication system, the communication system includes a first device, a second device and a third device in the SL communication.

The first device is configured to receive a service request sent by the second device, the service request carries a service type of the ranging/SL positioning function; and sends a service request to the third device, the service request carries the service type of the ranging/SL positioning function received from the second device; policy/parameter used to perform the ranging/SL positioning function are determined according to the service type.

The second device is configured to send a service request to the first device.

The third device is configured to receive the service request sent by the first device; determine the policy/parameter used to perform the ranging/SL positioning function according to the service type.

Optionally, the first device and the third device determining the policy/parameter used to perform the ranging/SL positioning function according to the service type, includes: when the service type includes the first service, the first device and the third device determine to implement a first policy/parameter, the first policy/parameter is used to perform at least one of the discovery operation and service operation of ranging/SL positioning; when the service type includes the second service, the first device and the third device determine to implement the second policy/parameter, the second policy/parameter is used to perform at least one of the discovery operation and service operation of ranging/SL positioning; the first policy/parameter and the second policy/parameter are different policies/parameters.

Optionally, the first service includes a V2X service; the first policy/parameter includes a ranging/SL positioning policy/parameter of the V2X service.

Optionally, the second service includes a commercial service and/or a public safety service; the second policy/parameter includes a ranging/SL positioning policy/parameter of ProSe.

Optionally, the service request is a ranging/SL positioning service request.

Optionally, the ranging/SL positioning request is sent in a ranging/SL positioning service process initiated by the first device or the second device.

Optionally, the first device is further configured to perform a ranging/SL positioning procedure according to the policy/parameter determined; and to feed back the ranging/SL positioning result to the second device; and the third device is further configured to perform a ranging/SL positioning procedure according to the policy/parameter determined.

Optionally, the second device includes a second terminal, and the second terminal is configured to send a service request to the first device via an AMF.

Optionally, the second device includes an AF, and the AF is configured to send a service request to the first device via an NEF.

Optionally, the first device includes a first terminal.

Optionally, the second device includes one of a second terminal, an application server, and a core network function.

Optionally, the third device includes a third terminal.

It should be understood that the relevant descriptions of the first device, the second device, and the third device in the communication system can be referred to the aforementioned content, which will not be repeated here.

The following is an embodiment of the device of the present disclosure. For details not described in detail in the embodiment of the device, reference can be made to the corresponding content in the above method embodiments, which will not be repeated here.

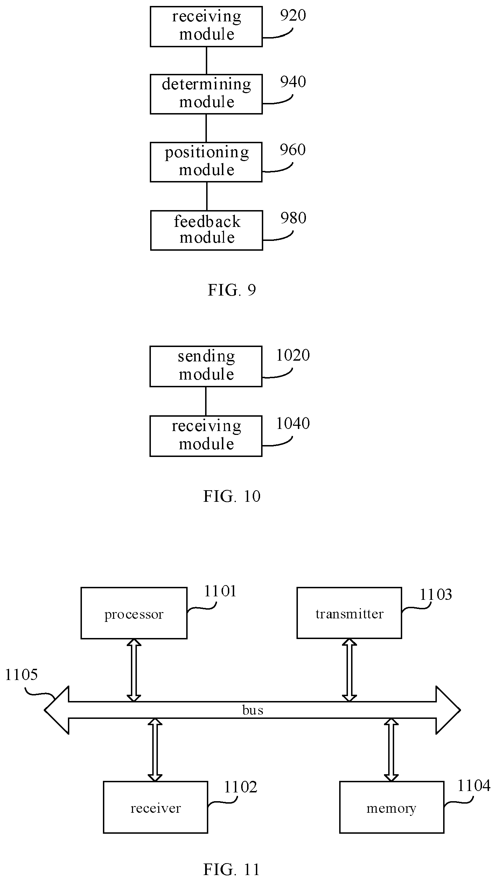

FIG. 9 shows a schematic diagram of an information determining device according to an embodiment of the present disclosure, and the device includes a receiving module 920 and a determining module 940.

The receiving module 920 is configured to receive a service request sent by a first device or a second device, the service request carrying a service type of a ranging/SL positioning function.

The determining module 940 is configured to determine the policy/parameter adopted for performing the ranging/SL positioning function according to the service type.

Optionally, the first determining module 940 is configured to: in a case that the service type includes the first service, determine to implement the first policy/parameter, the first policy/parameter being used to implement at least one of the discovery operation and service operation of ranging/SL positioning; in a case that the service type includes the second service, determine to implement the second policy/parameter, the second policy/parameter being used to implement at least one of the discovery operation and service operation of ranging/SL positioning; the first policy/parameter and the second policy/parameter are different policies/parameters.

Optionally, the first service includes a V2X service; the first policy/parameter includes a ranging/SL positioning policy/parameter of the V2X service.

Optionally, the second service includes a commercial service and/or a public safety service; the second policy/parameter includes a ranging/SL positioning policy/parameter of ProSe.

Optionally, the service request is a ranging/SL positioning service request.

Optionally, the ranging/SL positioning request is sent in a ranging/SL positioning service process initiated by the first device or the second device.

Optionally, the device further includes: a positioning module 960, configured to perform a ranging/SL positioning procedure according to the policy/parameter determined; a feedback module 980, configured to feed back the ranging/SL positioning result to the second device.

Optionally, the second device includes one of a second terminal, an application server, and a core network function.

FIG. 10 shows a schematic diagram of an information sending device according to an embodiment of the present disclosure, and the device includes a sending module 1020.

The sending module 1020 is configured to send a service request to a first device, the service request carrying a service type of a ranging/SL positioning function, the service type being used by the first device to determine the policy/parameter used to perform the ranging/SL positioning function.

Optionally, the first service included in the service type includes a V2X service; the first policy/parameter determined according to the first service includes a ranging/SL positioning policy/parameter of the V2X service.

Optionally, the second service included in the service type includes a commercial service and/or a public safety service; the second policy/parameter determined according to the second service includes a ranging/SL positioning policy/parameter of ProSe.

Optionally, the service request is a ranging/SL positioning service request.

Optionally, the sending module 1020 is configured to send a ranging/SL positioning service request to the first device in a ranging/SL positioning service process initiated by the second device.

Optionally, the sending module 1020 is configured to: send a service request to the first device via the access and mobility management function AMF.

Optionally, the sending module 1020 is configured to: send a service request to the first device via the network exposure function NEF.

Optionally, the device also includes: a receiving module 1040, configured to receive a ranging/SL positioning result fed back by the first device.

Optionally, the ranging/SL positioning result is determined by the first device executing a ranging/SL positioning procedure according to the policy/parameter determined.

Optionally, the first device includes a first terminal.

FIG. 11 shows a schematic diagram of the structure of a communication device (terminal or network device) according to an embodiment of the present disclosure, and the communication device includes: a processor 1101, a receiver 1102, a transmitter 1103, a memory 1104 and a bus 1105.

The processor 1101 comprises one or more processing cores, and the processor 1101 implements various functional applications and information processing by executing software programs and modules.

The receiver 1102 and the transmitter 1103 can be implemented as a communication component, which can be a communication chip.

The memory 1104 is connected to the processor 1101 via the bus 1105.

The memory 1104 can be used to store at least one instruction, and the processor 1101 is used to implement the at least one instruction to implement the various steps of the information determining method mentioned or the various steps of the information sending method in the above method embodiments.

In addition, the memory 1104 can be implemented by any type of volatile or non-volatile storage device or a combination thereof, and the volatile or non-volatile storage device includes but is not limited to: a magnetic disk or optical disk, an electrically erasable programmable read-only memory (EEPROM), an erasable programmable read-only memory (EPROM), a static random access memory (SRAM), a read-only memory (ROM), a magnetic memory, a flash memory, and a programmable read-only memory (PROM).

An embodiment of the present disclosure also provides a first terminal, the first terminal includes a transceiver and a processor; the transceiver is used to receive a service request sent by a second device, the service request carrying the service type of the ranging/SL positioning function, and send a service request to a third device, the service request carrying the service type of the ranging/SL positioning function received from the second device; the processor is used to determine the policy/parameter used to perform the ranging/SL positioning function according to the service type.

An embodiment of the present disclosure also provides a second terminal, the second terminal includes a transceiver; the transceiver is used to send a service request to the first device, the service request carrying the service type of the ranging/SL positioning function, and the service type is used for the first device and the third device to determine the policy/parameter used for the ranging/SL positioning function.

An embodiment of the present disclosure also provides a third terminal, the third terminal includes a transceiver and a processor; the transceiver is used to receive a service request sent by the first device, the service request carrying the service type of the ranging/SL positioning function; the processor is used to determine the policy/parameter used to perform the ranging/SL positioning function according to the service type.

An embodiment of the present disclosure also provides a computer-readable storage medium, in which a computer program is stored, and the computer program is executed by a processor to implement the above-mentioned information determination method, or the information sending method.

An embodiment of the present disclosure also provides a chip, which includes a programmable logic circuit/program instructions. When the chip is running, the chip is used to implement the above-mentioned information determination method, or the information sending method.

An embodiment of the present disclosure also provides a computer program product, which includes computer instructions, which are stored in a computer-readable storage medium, and the processor reads and executes the computer instructions from the computer-readable storage medium to implement the above-mentioned information determination method, or the information sending method.

The above descriptions are only optional embodiments of the present disclosure and are not intended to limit the present disclosure. Any modifications, improvements, etc. made within the principles of the present disclosure shall be included in the protection scope of the present disclosure.

## Claims

1. An information determining method, performed by a first device in a sidelink, SL, communication by comprising:
receiving (102, 203) a service request sent by a second device, wherein the service request carries a service type of a ranging/SL positioning; and
determining (104, 2061) a policy/parameter used to perform the ranging/SL positioning according to the service type;
wherein the first device comprises a first terminal;
the second device comprises one of a second terminal, an application server and a core network function.

2. The method according to claim 1, wherein determining (104, 2061) the policy/parameter used to perform the ranging/SL positioning according to the service type comprises:
determining to perform a first policy/parameter in a case that the service type comprises a first service, wherein the first policy/parameter is used to perform at least one of a discovery operation or a service operation of ranging/SL positioning;
determining to perform a second policy/parameter in a case that the service type comprises a second service, wherein the second policy/parameter is used to perform at least one of a discovery operation or a service operation of ranging/SL positioning;
wherein the first policy/parameter and the second policy/parameter are different.

3. The method according to claim 2, wherein,
the first service comprises a vehicle-to-everything, V2X, service;
the first policy/parameter comprises a ranging/SL positioning policy/parameter of the V2X service;
the second service comprises at least one of a commercial service or a public safety service;
the second policy/parameter comprises a ranging/SL positioning policy/parameter of proximity services, ProSe.

4. The method according to any one of claims 1 to 3, wherein,
the service request is a ranging/SL positioning service request;
wherein the ranging/SL positioning request is sent in a ranging/SL positioning service process initiated by the second device.

5. The method according to any one of claims 1 to 4, further comprising:
performing (2071) a ranging/SL positioning according to the policy/parameter determined;
feeding back (2081) a ranging/SL positioning result to the second device.

6. An information sending method, performed by a second device in a sidelink, SL, communication comprising:
sending (202) a service request to a first device, wherein the service request carries a service type of a ranging/SL positioning, and the service type is used by the first device to determine a policy/parameter used to perform the ranging/SL positioning;
wherein the first device comprises a first terminal;
the second device comprises one of a second terminal, an application server and a core network function.

7. The method according to claim 6, wherein
a first service comprised in the service type comprises a vehicle to everything, V2X, service;
a first policy/parameter determined according to the first service comprises a ranging/SL positioning policy/parameter of the V2X service;
a second service comprised in the service type comprises at least one of a commercial service or a public safety service;
a second policy/parameter determined according to the second service comprises a ranging/SL positioning policy/parameter of ProSe.

8. The method according to any one of claims 6 to 7, wherein
the service request is a ranging/SL positioning service request;
wherein sending the service request to the first device comprises:
in a ranging/SL positioning service process initiated by the second device, sending the ranging/SL positioning service request to the first device.

9. The method according to any one of claims 6 to 8, wherein the second device comprises the second terminal, and sending (202) the service request to the first device comprises:
sending the service request to the first device via an access and mobility management function, AMF.

10. The method according to any one of claims 6 to 8, wherein the second device comprises an application function, AF, and sending (202) the service request to the first device comprises:
sending, by the AF, the service request to the first device via a network exposure function, NEF.

11. The method according to any one of claims 6 to 10, further comprising:
receiving a ranging/SL positioning result fed back by the first device;
wherein, the ranging/SL positioning result is determined by the first device performing a ranging/SL positioning according to the policy/parameter determined.

12. An information determining device, configured to implement the method according to any one of claims 1 to 5.

13. An information sending device, configured to implement the method according to any one of claims 6 to 11.

## Patentansprüche

1. Ein Informationsbestimmungsverfahren, das von einer ersten Vorrichtung in einer Sidelink-, SL-, Kommunikation durchgeführt wird, das folgende Schritte aufweist:
Empfangen (102, 203) einer Dienstanforderung, die von einer zweiten Vorrichtung gesendet wird, wobei die Dienstanforderung einen Diensttyp einer Entfernungsmessung/SL-Positionierung trägt; und
Bestimmen (104, 2061) einer Richtlinie/eines Parameters, die/der verwendet wird, um die Entfernungsmessung/SL-Positionierung gemäß dem Diensttyp durchzuführen;
wobei die erste Vorrichtung ein erstes Endgerät aufweist;
die zweite Vorrichtung eines von einem zweiten Endgerät, einem Anwendungsserver und einer Kernnetzwerkfunktion aufweist.

2. Das Verfahren gemäß Anspruch 1, wobei das Bestimmen (104, 2061) der Richtlinie/des Parameters, die/der verwendet wird, um die Entfernungsmessung/SL-Positionierung gemäß dem Diensttyp durchzuführen, folgende Schritte aufweist:
Bestimmen, eine erste Richtlinie/einen ersten Parameter in einem Fall durchzuführen, in dem der Diensttyp einen ersten Dienst aufweist, wobei die erste Richtlinie/der erste Parameter verwendet wird, um zumindest entweder eine Entdeckungsoperation oder eine Dienstoperation der Entfernungsmessung/SL-Positionierung durchzuführen;
Bestimmen, eine zweite Richtlinie/einen zweiten Parameter in einem Fall durchzuführen, in dem der Diensttyp einen zweiten Dienst aufweist, wobei die zweite Richtlinie/der zweite Parameter verwendet wird, um zumindest entweder eine Entdeckungsoperation oder eine Dienstoperation der Entfernungsmessung/SL-Positionierung durchzuführen;
wobei die erste Richtlinie/der erste Parameter und die zweite Richtlinie/der zweite Parameter unterschiedlich sind.

3. Das Verfahren gemäß Anspruch 2, wobei
der erste Dienst einen Vehicle-to-Everything-, V2X-, Dienst aufweist;
die erste Richtlinie/der erste Parameter eine Entfernungsmessung/SL-Positionierungsrichtlinie/einen Entfernungsmessung/SL-Positionierungsparameter des V2X-Dienstes aufweist;
der zweite Dienst zumindest einen gewerblichen Dienst oder einen Dienst der öffentlichen Sicherheit aufweist;
die zweite Richtlinie/der zweite Parameter eine Entfernungsmessung/SL-Positionierungsrichtlinie/einen Entfernungsmessung/SL-Positionierungsparameter von Näherungsdiensten, ProSe, aufweist.

4. Das Verfahren gemäß einem der Ansprüche 1 bis 3, wobei
die Dienstanforderung eine Entfernungsmessung/SL-Positionierungsdienstanforderung ist;
wobei die Entfernungsmessung/SL-Positionierungsanforderung in einem Entfernungsmessung/SL-Positionierungsdienstprozess gesendet wird, der von der zweiten Vorrichtung initiiert wird.

5. Das Verfahren gemäß einem der Ansprüche 1 bis 4, das ferner folgende Schritte aufweist:
Durchführen (2071) einer Entfernungsmessung/SL-Positionierung gemäß der bestimmten Richtlinie/dem bestimmten Parameter;
Rückmelden (2081) eines Entfernungsmessung/SL-Positionierungsergebnisses an die zweite Vorrichtung.

6. Ein Informationssendeverfahren, das von einer zweiten Vorrichtung in einer Sidelink-, SL-, Kommunikation durchgeführt wird, das folgenden Schritt aufweist:
Senden (202) einer Dienstanforderung an eine erste Vorrichtung, wobei die Dienstanforderung einen Diensttyp einer Entfernungsmessung/SL-Positionierung trägt und der Diensttyp von der ersten Vorrichtung verwendet wird, um eine Richtlinie/einen Parameter zu bestimmen, die/der verwendet wird, um die Entfernungsmessung/SL-Positionierung durchzuführen;
wobei die erste Vorrichtung ein erstes Endgerät aufweist;
die zweite Vorrichtung eines von einem zweiten Endgerät, einem Anwendungsserver und einer Kernnetzwerkfunktion aufweist.

7. Das Verfahren gemäß Anspruch 6, wobei
ein erster Dienst, der in dem Diensttyp enthalten ist, einen Vehicle-to-Everything-, V2X-, Dienst aufweist;
eine erste Richtlinie/ein erster Parameter, die/der gemäß dem ersten Dienst bestimmt wird, eine Entfernungsmessung/SL-Positionierungsrichtlinie/einen Entfernungsmessung/SL-Positionierungsparameter des V2X-Dienstes aufweist;
ein zweiter Dienst, der in dem Diensttyp enthalten ist, zumindest einen gewerblichen Dienst oder einen Dienst der öffentlichen Sicherheit aufweist;
eine zweite Richtlinie/ein zweiter Parameter, die/der gemäß dem zweiten Dienst bestimmt wird, eine Entfernungsmessung/SL-Positionierungsrichtlinie/einen Entfernungsmessung/SL-Positionierungsparameter von ProSe aufweist.

8. Das Verfahren gemäß einem der Ansprüche 6 bis 7, wobei
die Dienstanforderung eine Entfernungsmessung/SL-Positionierungsdienstanforderung ist;
wobei das Senden der Dienstanforderung an die erste Vorrichtung folgenden Schritt aufweist:
in einem Entfernungsmessung/SL-Positionierungsdienstprozess, der von der zweiten Vorrichtung initiiert wird, Senden der Entfernungsmessung/SL-Positionierungsdienstanforderung an die erste Vorrichtung.

9. Das Verfahren gemäß einem der Ansprüche 6 bis 8, wobei die zweite Vorrichtung das zweite Endgerät aufweist, und das Senden (202) der Dienstanforderung an die erste Vorrichtung folgenden Schritt aufweist:
Senden der Dienstanforderung an die erste Vorrichtung über eine Zugangs- und Mobilitätsverwaltungsfunktion, AMF.

10. Das Verfahren gemäß einem der Ansprüche 6 bis 8, wobei die zweite Vorrichtung eine Anwendungsfunktion, AF, aufweist, und das Senden (202) der Dienstanforderung an die erste Vorrichtung folgenden Schritt aufweist:
Senden, durch die AF, der Dienstanforderung an die erste Vorrichtung über eine Netzwerkexpositionsfunktion, NEF.

11. Das Verfahren gemäß einem der Ansprüche 6 bis 10, das ferner folgenden Schritt aufweist:
Empfangen eines Entfernungsmessung/SL-Positionierungsergebnisses, das von der ersten Vorrichtung zurückgemeldet wird;
wobei das Entfernungsmessung/SL-Positionierungsergebnis von der ersten Vorrichtung bestimmt wird, die eine Entfernungsmessung/SL-Positionierung gemäß der bestimmten Richtlinie/dem bestimmten Parameter durchführt.

12. Eine Informationsbestimmungsvorrichtung, die dazu konfiguriert ist, das Verfahren gemäß einem der Ansprüche 1 bis 5 zu implementieren.

13. Eine Informationssendevorrichtung, die dazu konfiguriert ist, das Verfahren gemäß einem der Ansprüche 6 bis 11 zu implementieren.

## Revendications

1. Procédé de détermination d'informations, effectué par un premier dispositif dans une communication de liaison latérale, SL, comprenant :
la réception (102, 203) d'une demande de service envoyée par un deuxième dispositif, dans laquelle la demande de service transporte un type de service d'un positionnement de télémétrie/SL ; et
la détermination (104, 2061) d'une politique/d'un paramètre utilisé pour effectuer le positionnement de télémétrie/SL selon le type de service ;
dans lequel le premier dispositif comprend un premier terminal ;
le deuxième dispositif comprend l'un d'un deuxième terminal, un serveur d'application et une fonction de réseau central.

2. Procédé selon la revendication 1, dans lequel la détermination (104, 2061) de la politique/du paramètre utilisé pour effectuer le positionnement de télémétrie/SL selon le type de service comprend :
la détermination d'effectuer une première politique/un premier paramètre dans un cas où le type de service comprend un premier service, dans lequel la première politique/le premier paramètre est utilisé pour effectuer au moins l'un d'une opération de découverte et une opération de service de positionnement de télémétrie/SL ;
la détermination d'effectuer une deuxième politique/un deuxième paramètre dans un cas où le type de service comprend un deuxième service, dans lequel la deuxième politique/le deuxième paramètre est utilisé pour effectuer au moins l'un d'une opération de découverte et une opération de service de positionnement de télémétrie/SL ;
dans lequel la première politique/le premier paramètre et la deuxième politique/le deuxième paramètre sont différents.

3. Procédé selon la revendication 2, dans lequel,
le premier service comprend un service de véhicule-à-tout, V2X ;
la première politique/le premier paramètre comprend une politique/un paramètre de positionnement de télémétrie/SL du service V2X ;
le deuxième service comprend au moins l'un d'un service commercial ou un service de sécurité publique ;
la deuxième politique/le deuxième paramètre comprend une politique/un paramètre de positionnement de télémétrie/SL de services de proximité, ProSe.

4. Procédé selon l'une quelconque des revendications 1 à 3, dans lequel,
la demande de service est une demande de service de positionnement de télémétrie/SL ;
dans lequel la demande de positionnement de télémétrie/SL est envoyée dans un processus de service de positionnement de télémétrie/SL initié par le deuxième dispositif.

5. Procédé selon l'une quelconque des revendications 1 à 4, comprenant en outre :
le fait d'effectuer (2071) un positionnement de télémétrie/SL selon la politique/le paramètre déterminé ; le renvoi (2081) d'un résultat de positionnement de télémétrie/SL au deuxième dispositif.

6. Procédé d'envoi d'informations, effectué par un deuxième dispositif dans une communication de liaison latérale, SL, comprenant :
l'envoi (202) d'une demande de service à un premier dispositif, dans lequel la demande de service transporte un type de service d'un positionnement de télémétrie/SL, et le type de service est utilisé par le premier dispositif pour déterminer une politique/un paramètre utilisé pour effectuer le positionnement de télémétrie/SL ;
dans lequel le premier dispositif comprend un premier terminal ;
le deuxième dispositif comprend l'un d'un deuxième terminal, un serveur d'application et une fonction de réseau central.

7. Procédé selon la revendication 6, dans lequel
un premier service compris dans le type de service comprend un service véhicule-à-tout, V2X ;
une première politique/un premier paramètre déterminé selon le premier service comprend une politique/un paramètre de positionnement de télémétrie/SL du service V2X ;
un deuxième service compris dans le type de service comprend au moins l'un d'un service commercial ou un service de sécurité publique ;
une deuxième politique/un deuxième paramètre déterminé selon le deuxième service comprend une politique/un paramètre de positionnement de télémétrie/SL de ProSe.

8. Procédé selon l'une quelconque des revendications 6 à 7, dans lequel
la demande de service est une demande de service de positionnement de télémétrie/SL ;
dans lequel l'envoi de la demande de service au premier dispositif comprend :
dans un processus de service de positionnement de télémétrie/SL initié par le deuxième dispositif, l'envoi de la demande de service de positionnement de télémétrie/SL au premier dispositif.

9. Procédé selon l'une quelconque des revendications 6 à 8, dans lequel le deuxième dispositif comprend le deuxième terminal, et l'envoi (202) de la demande de service au premier dispositif comprend :
l'envoi de la demande de service au premier dispositif par l'intermédiaire d'une fonction de gestion d'accès et de mobilité, AMF.

10. Procédé selon l'une quelconque des revendications 6 à 8, dans lequel le deuxième dispositif comprend une fonction d'application, AF, et l'envoi (202) de la demande de service au premier dispositif comprend :
l'envoi, par l'AF, de la demande de service au premier dispositif par l'intermédiaire d'une fonction d'exposition réseau, NEF.

11. Procédé selon l'une quelconque des revendications 6 à 10, comprenant en outre :
la réception d'un résultat de positionnement de télémétrie/SL renvoyé par le premier dispositif ;
dans lequel le résultat de positionnement de télémétrie/SL est déterminé par le premier dispositif effectuant un positionnement de télémétrie/SL selon la politique/le paramètre déterminé.

12. Dispositif de détermination d'informations, configuré pour mettre en œuvre le procédé selon l'une quelconque des revendications 1 à 5.

13. Dispositif d'envoi d'informations, configuré pour mettre en œuvre le procédé selon l'une quelconque des revendications 6 à 11.
